# EUROPÄISCHE PATENTANMELDUNG

(11) **EP 0 650 985 A1**
(43) Veröffentlichungstag der Anmeldung: **03.05.1995**
(21) Anmeldenummer: 94116769.4
(22) Anmeldetag: 25.10.1994
(51) Int. Cl.: C08F 220/12, C08F 212/06, C08F 2/02, C08F 2/06, C09D 133/04, C09D 5/03

(54) **Vernetzbare Pulverbindemittel**

(30) Priorität: 03.11.1993 DE 4337480
(71) Anmelder: BASF Aktiengesellschaft, D-67063 Ludwigshafen (DE)
(72) Erfinder: Kempter, Fritz Erdmann, Dr., D-68161 Mannheim (DE); Niessner, Manfred, Dr., D-67105 Schifferstadt (DE); Diener, Ralph, Dr., D-67157 Wachenheim (DE); Renz, Hans, Dr., D-67149 Meckenheim (DE); Weiss, Wolfram, Dr., D-67112 Mutterstadt (DE)

(57) **Zusammenfassung**

Vernetzbare Copolymerisate mit einem zahlenmittleren Molekulargewicht von 1500 bis 6000 und einer Molekulargewichtsverteilung entsprechend einer Polydispersität von 1 bis zu 4,0, welche aus
a) 50 bis 85 mol-% eines Monomeren (a) mit dem Strukturelement der Methacrylsäure,
b) 15 bis 50 mol-% eines Monomeren (b) mit dem Strukturelement der Acrylsäure, des Styrols oder eines Styrolderivates und
c) 0 bis 20 mol-% weiterer radikalisch polymerisierender Comonomeren (c)
aufgebaut sind, wobei
d) 5 bis 40 mol-% der Gesamtmenge der Monomeren (a) bis (c) funktionelle Gruppen tragende Monomeren (d) sind, über die eine Vernetzung durch Kondensations- oder Additionsreaktionen mit einem Vernetzungsmittel herbeigeführt werden kann,
erhältlich durch radikalische Substanz- oder Lösungspolymerisation bei einer Temperatur von 140 bis 220°C und einer mittleren Verweilzeit von 2 bis 90 min.

Die vernetzbaren Copolymerisate finden insbesondere als Bindemittel für die Pulverlackbeschichtungen Verwendung.

## Beschreibung

Die vorliegende Erfindung betrifft neue vernetzbare Copolymerisate mit einem zahlenmittleren Molekulargewicht von 1500 bis 6000 und einer Molekulargewichtsverteilung entsprechend einer Polydispersität von 1 bis zu 4,0, welche aus
a) 50 bis 85 mol-% eines Monomeren (a) mit dem Strukturelement der Methacrylsäure,
b) 15 bis 50 mol-% eines Monomeren (b) mit dem Strukturelement der Acrylsäure, des Styrols oder eines Styrolderivates und
c) 0 bis 20 mol-% weiterer radikalisch polymerisierender Comonomeren (c),
aufgebaut sind, wobei
d) 5 bis 40 mol-% der Gesamtmenge der Monomeren (a) bis (c) funktionelle Gruppen tragende Monomeren (d) sind, über die eine Vernetzung durch Kondensations- oder Additionsreaktionen mit einem Vernetzungsmittel herbeigeführt werden kann,
erhältlich durch radikalische Substanz- oder Lösungspolymerisation bei einer Temperatur von 140 bis 220°C und einer mittleren Verweilzeit von 2 bis 90 min.

Weiterhin betrifft die Erfindung ein Verfahren zur Herstellung dieser vernetzbaren Copolymerisate, die Verwendung der hiernach erhaltenen vernetzbaren Copolymerisate als Beschichtungsmittel, Zubereitungen, welche diese Copolymerisate enthalten, sowie mit Überzügen versehene Gegenstände, die unter Verwendung dieser Copolymerisate erhältlich sind.

Vernetzbare Copolymerisate mit enger Molekulargewichtsverteilung und niedrigem Molekulargewicht, die überwiegend aus Methacrylsäure oder ihren Derivaten aufgebaut sind, sind allgemein bekannt.

Diese Produkte werden vorzugsweise als Pulverbindemittel zur Herstellung von Überzugsmitteln auf dem Lackgebiet eingesetzt.

Speziell sind in der DE-A 2 328 013 Hydroxylgruppen tragende Copolymerisate mit einem Molekulargewicht von 3000 bis 10000 beschrieben, die zu mehr als 75 mol-% aus Methacrylsäure aufgebaut sind und sich zu Pulverbindemitteln verarbeiten lassen. Bevorzugte Herstellungsverfahren sind die Substanz- oder Lösungsmittelpolymerisation in einem Rührkessel oder Rohrreaktor, wobei die Verweilzeiten im Reaktor 30 min bis ca. 4 Stunden und die Reaktionstemperaturen 40 bis 180°C betragen. Zur Molekulargewichtsverteilung der Copolymerisate werden keine Angaben gemacht.

Die DE-A 2 240 312 betrifft pulverförmige, mit Glycidylgruppen funktionalisierte Copolymerisate, hergestellt aus Gemischen von Monomeren, die bis zu ca. 80 mol-% das Strukturelement der Methacrylsäure enthalten. Sie weisen eine Glasübergangstemperatur von 40 bis 90°C und ein zahlenmittleres Molekulargewicht von 2500 bis 8500 auf. Die Herstellung erfolgt bevorzugt durch Lösungspolymerisation über mehrere Stunden hinweg bei ca. 110°C.

Die DE-A 4 203 278 hat allgemein ein spezielles Polymerisationsverfahren zum Gegenstand, bei dem die Emulsions- oder Lösungspolymerisation in dünner Schicht zwischen der Innenwand eines zylindrischen Rohrreaktors und einem darin rotierenden zylindrischen Rotor (Ringspalt-Dünnschichtreaktor) stattfindet. Diese Methode gestattet es, wegen der wirksamen Wärmeabfuhr auch sehr exotherme Polymerisationen bei hohen Temperaturen in kurzer Zeit vorzunehmen, und sie ist von besonderem Vorteil für die Herstellung von Polymerisaten mit enger Molekulargewichtsverteilung.

Die an Pulverbindemittel gestellten vielfältigen, zum Teil divergierenden Anforderungen hinsichtlich der Verarbeitungseigenschaften und der Gebrauchseigenschaften der damit hergestellten Lacküberzüge werden von den bisher bekannten Polymerisaten nicht zufriedenstellend erfüllt.

Die Pulver sollen frei rieselbar bleiben, wenn sie bei Herstellung, Lagerung und Transport einer erhöhten Temperatur bis ca. 50°C ausgesetzt sind. Diese Eigenschaft wird auch als Blockfestigkeit bezeichnet. Andererseits soll jedoch die Einbrenntemperatur, bei der die Pulver verfilmen und durch eine Vernetzungsreaktion ausgehärtet werden, möglichst niedrig liegen, damit die Bindemittel auch zur Beschichtung von hitzempfindlichen Substraten verwendet werden können. Eine zusätzliche Bedingung ist, daß die Pulver beim Einbrennvorgang zunächst homogen verfilmen und erst anschließend unter Vernetzung aushärten. Ist dies nicht gewährleistet, so resultieren Überzüge mit unbefriedigenden anwendungstechnischen Eigenschaften. Eine schnelle Verfilmung in einem engen Temperaturintervall, die noch nicht wesentlich durch die Vernetzungsreaktion beeinträchtigt wird, setzt bekanntermaßen ein relativ geringes, jedoch möglichst einheitliches Molekulargewicht des Polymeren voraus. Die bisher bekannten Pulverlackbindemittel lassen insoweit noch zu wünschen übrig.

Der Erfindung lag daher die Aufgabe zugrunde, diesen Mängeln, vor allem im Falle der Pulverlackbindemittel, abzuhelfen.

Demgemäß wurden die eingangs definierten Copolymerisate gefunden.

Das zahlenmittlere Molekulargewicht Mₙ der erfindungsgemäßen Polymerisate liegt zwischen 1500 und 6000, insbesondere zwischen 2000 und 4000.

Die Polydispersität M_{w}/Mₙ, der Quotient aus dem zahlenmittleren und dem gewichtsmittleren Molekulargewicht der Copolymerisate, stellt ein Maß für die Molekulargewichtsverteilung der Copolymerisate dar und hat im Idealfall den Wert 1, jedoch genügen für die Praxis auch Werte unter 4,0, insbesondere unter 3,5.

Die Angaben zur Polydispersität sowie zum zahlenmittleren und gewichtsmittleren Molekulargewicht Mₙ und M_{w}, beziehen sich hier auf gelpermeationschromatographische Messungen, wobei Polystyrol als Standart verwendet wurde. Die Methode ist im Analytiker-Taschenbuch Bd. 4, Seiten 433 bis 442 , Berlin 1984 beschrieben.

Die Bildung von Copolymerisaten geringer Polydispersität ist besonders begünstigt, wenn Reaktionstemperaturen von 140 bis 220, bevorzugt von 150 bis 190 und besonders bevorzugt von 150 bis 180°C sowie Reaktionszeiten von 2 bis 90, bevorzugt von 4 bis 30 und besonders bevorzugt von 6 bis 20 Minuten gewählt werden.

Falls Monomere oder Lösungsmittel mitverwendet werden, deren Siedepunkte unterhalb der Reaktionstemperatur liegen, ist die Reaktion zweckmäßigerweise unter Druck, vorzugsweise unter dem Eigendruck des Systems durchzuführen. Höhere Drücke als 30 bar sind in der Regel jedoch nicht erforderlich.

Derartige Polymerisationsbedingungen lassen sich vor allem in einem Ringspalt-Dünnschichtreaktor mit Rückführungseinrichtung aufrecht erhalten, da hier die exotherme Polymerisation wegen des günstigen Verhältnisses von Wärmeaustauschfläche zu Reaktionsvolumen unter weitgehend isothermen Bedingungen durchführbar ist.

Copolymerisationen in Ringspalt-Dünnschichtreaktoren sind z.B. in der DE-A 4 203 277 und DE-A 4 203 278 beschrieben. Sie sind allgemein bekannt und können z.B. in der Art eines mit einem Rotor ausgestatteten Rohrreaktors ausgeführt werden und sind z.B. von der Fa. Buss SMS GmbH Verfahrenstechnik erhältlich. Sie sind vorzugsweise mit einer Vorrichtung ausgestattet, mit dem ein Teil des Produktes an den Reaktoreintritt zurückgeführt werden kann.

Andere Polymerisationsapparate, z.B. Rührkessel, kommen ebenfalls in Betracht, sofern für eine ausreichende Wärmeabfuhr gesorgt wird.

Man kann die Polymerisation in Substanz ausführen, jedoch ist die Lösungspolymerisation wegen der geringen Viskosität der entstehenden Polymerlösungen im allgemeinen zu bevorzugen. Die Menge der Lösungsmittel beträgt im allgemeinen 0 bis 30, vorzugsweise 10 bis 25 Gew.-%, bezogen auf die Gesamtmenge der eingesetzten Monomeren.

Als Lösungsmittel eignen sich alle Flüssigkeiten, die sich gegenüber den Reaktionspartnern inert verhalten, also beispielsweise Ether wie Ethylenglycolether und Ethylendiglycolether, Ester wie Butylacetat und Ketone wie Methylamylketon. Besonders vorteilhaft werden regelnde Lösungsmittel verwendet wie Alkylaromaten, z.B. Toluol, Xylole und besonders Cumol und m-Xylol sowie aliphatische Alkohole, z.B. Isopropanol.

Es empfiehlt sich meistens, den Umsatz auf 70 bis 95, vorzugsweise 80 bis 90 mol-% zu begrenzen, da man auf diese Weise engere Molekulargewichtsverteilungen erzielt. Nicht umgesetzte Monomere sowie flüchtige Oligomere und das Lösungsmittel werden nach üblicher destillativer Abtrennung vom Polymeren zweckmäßigerweise wieder in die Polymerisation zurückgeführt.

Als Polymerisationsinitiatoren eignen sich vor allem solche radikalbildenden Verbindungen, deren Zerfallstemperatur bei 140 bis 200°C liegt, also beispielsweise Di-tert.-butylperoxid und Dibenzoylperoxid.

Die Menge der Initiatoren beträgt vorzugsweise 0,5 bis 10, besonders bevorzugt 1 bis 5 mol-% der Gesamtmenge der eingesetzten Monomeren.

Bezüglich der stofflichen Zusammensetzung der Copolymerisate ist zu betonen, daß es unabhängig von der Art des restlichen Molekülteils auf den verhältnismäßig hohen Anteil der Monomeren (a) mit dem Strukturelement 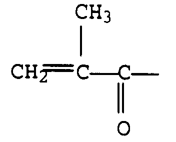
der Methacrylsäure ankommt und daß es prinzipiell keine Rolle spielt, welchem Monomerentyp (a) bis (c) die Monomeren (d) mit den funktionellen Gruppen angehören. Zum Monomerentyp (a) zählen somit Monomere mit nicht-reaktionsfähigen Resten und solche vom Typ (d). Im folgenden werden zunächst die erstgenannten Monomeren und danach die Monomeren (d) mit den funktionellen Gruppen näher erläutert.

Bei den Monomeren (a) sind in erster Linie die C₁- bis C₁₂-Alkylester der Methacrylsäure zu nennen, beispielsweise Ethylmethacrylat, 2-Ethylhexylmethacrylat sowie n-Butylmethacrylat und vor allem Methylmethacrylat. Ferner kommen Methoxyethylmethacrylat, Cyclohexylmethacrylat und Benzylmethacrylat in Betracht.

Beispiele für gut geeignete Monomeren (b) sind C₁- bis C₁₂-Alkylester der Acrylsäure wie iso- und n-Butylacrylat sowie vor allem Methylacrylat und außer Styrol und 1-Methylstyrol beispielsweise 4-tert.-Butylstyrol und 2-Chlorstyrol.

Als weitere radikalisch polymerisierbare Monomeren (c) seien Vinylester von C₂- bis C₆-Carbonsäuren, wie vor allem Vinylacetat und Vinylpropionat, Vinylhalogenide wie Vinylchlorid und Vinylidenchlorid, konjugierte Diene wie Butadien und Isopren, Vinylether von C₁- bis C₂₀-Alkanolen, z.B. Vinyl-iso-butylether, Acrylnitril, Methacrylnitril und die C₁- bis C₁₀-Alkylester der Crotonsäure und der Maleinsäure genannt. Ferner kommen heterocyclische Vinylverbindungen wie 2-Vinylpyridin und N-Vinylpyrrolidon in Betracht. Von besonderer Bedeutung ist Maleinsäureanhydrid.

Die Monomeren (d), die jeder der Klassen (a) bis (c) angehören können, tragen funktionelle Gruppen, über die mit einer Vernetzungskomponente, welche komplementäre Gruppen trägt, die thermische Vernetzung der Copolymerisate durch eine Kondensations- oder vorzugsweise Additionsreaktion bewirkt werden kann. Solche funktionellen Gruppen sind z.B. die Hydroxylgruppe, die Carbonamidgruppe, die Hydroxycarbonylgruppe, die Carbonsäureanhydridgruppe, die Carbanhydridgruppe, die Aminogruppe, die Carbonylgruppe in Aldehyd- oder Ketonfunktion, die Isocyanatgruppe und vor allem die Carboxylgruppe und die Epoxigruppe.

Bevorzugt sind Copolymerisate, die die Hydroxylgruppe in Kombination mit der Epoxidgruppe oder der Carboxylgruppe enthalten.

Entsprechende Monomere sind in erster Linie die relativ preiswerten Verbindungen 2-Hydroxyethylacrylat und -methacrylat, Allylalkohol, 2-Aminoethylacrylat und -methacrylat, Acrolein, Methacrolein und Vinylethylketon, Acrylamid und Methacrylamid, Dimethyl-3-isopropenylbenzylisocyanat (TMI) und 4-Isocyanatostyrol sowie vor allem Acrylsäure, Methacrylsäure, Crotonsäure, Maleinsäure und deren Anhydride, Glycidylacrylat und Glycidylmethacrylat.

Die Polymerisate sind aufgebaut aus
50 bis 85 mol-%, bevorzugt 55 bis 75 mol-% und besonders bevorzugt 60 bis 75 mol-% einem oder mehreren der Monomeren (a),
15 bis 50 mol-% und bevorzugt 25 bis 45 mol-% einem oder mehreren der Monomeren (b), und
0 bis 20 mol-%, bevorzugt 5 bis 15 mol-% einem oder mehreren der Monomeren (c).

Der Anteil der Monomeren (d) an der Gesamtmenge der Monomeren (a), (b) und (c) beträgt 5 bis 40 mol-%, bevorzugt 10 bis 27,5 mol-%, besonders bevorzugt 15 bis 25 mol-%.

Dieser Anteil entspricht im Regelfall der Menge der funktionellen Gruppen im Vernetzungsmittel, kann jedoch auch größer sein, wenn das vernetzte Copolymerisat noch freie Gruppen der genannten Art enthalten soll, die zwar nicht der Vernetzung, dafür aber der Abwandlung der Eigenschaften des vernetzten Polymeren dienen, etwa um es weniger elektrostatisch aufladbar zu machen. Solche freien Gruppen sind insbesondere die Carboxylgruppe, die Hydroxylgruppe und die Amidogruppe.

Bei Umsätzen von weniger als 100% wird die gewünschte Zusammensetzung des Polymerisates (a) selten der der eingesetzten Monomerenmischung entsprechen, weil die Monomeren mit unterschiedlicher Geschwindigkeit polymerisieren. In solchen Fällen ist es erforderlich, den Anteil der jeweiligen Monomeren an dem Monomerengemisch entsprechend ihrer Reaktionsgeschwindigkeit anzupassen. Diese Anpassung kann beispielsweise so erfolgen, daß man die Zusammensetzung der nicht umgesetzten abdestillierten Monomerenmischung analysiert und so auf die Zusammensetzung des Copolymerisates zurückschließt. Grundsätzlich wird es beispielsweise erforderlich sein, den Anteil der Methacrylsäurederivate relativ hoch zu wählen und z.B. den der Styrolmonomeren zu erniedrigen.

Demgemäß enthalten die Monomerenmischungen üblicherweise
60 bis 95 mol-%, bevorzugt 65 bis 90 mol-% und besonders bevorzugt 70 bis 85 mol-% eines oder mehrere der Monomeren (a),
5 bis 40 mol-% und bevorzugt 10 bis 35 mol-% eines oder mehrere der Monomeren (b), und
0 bis 35 mol-%, bevorzugt 5 bis 20 mol-% eines oder mehrere der Monomeren (c).

Der Anteil der Monomeren (d) an der Gesamtmenge der eingesetzten Monomeren (a), (b) und (c) beträgt 5 bis 40 mol-%, bevorzugt 10 bis 27,5 mol-%.

Vorzugsweise befreit man die Copolymerisate im Anschluß an ihre Herstellung destillativ vom Lösungsmittel und von überschüssigen Monomeren und entfernt die verbleibenden geringen Mengen an Restmonomeren und flüchtigen Oligomeren bei vermindertem Druck oder Durchleiten von Stickstoff durch die Schmelze.

Hierzu ist auf Grund der hohen Glasubergangstemperaturen der Polymerisate und der zum Teil hohen Siedepunkte der Monomeren ein kontinuierlich betriebener in Reihe geschalteter Dünnschichtverdampfer besonders gut geeignet, in dem das Copolymerisat vorzugsweise bei Temperaturen von 180 bis 220°C oberhalb der Polymerisationstemperatur entgast wird.

Die Copolymerisate sind in dieser Form handelsfähig. Meistens überführt man sie in eine gebrauchsfertige Zubereitung, indem man sie mit der Vernetzungskomponente vermischt und von der Mischung eine Lösung oder Dispersion herstellt.

Entsprechend dem Hauptanwendungsgebiet der Pulverlacke verarbeitet man die trockenen Mischungen jedoch vorzugsweise wie üblich, gewünschtenfalls zusammen mit Zusatzstoffen wie Pigmenten, Vernetzungskatalysatoren, Stabilisatoren, Mattierungsmitteln und Verlaufshilfsmitteln in an sich bekannter Weise zu Pulvern des mittleren Teilchendurchmessers von 10 bis 100 µm.

Geeignete Vernetzungsmittel für die erfindungsgemäßen Polymerisate mit funktionellen Gruppen sind grundsätzlich alle Verbindungen mit mehreren funktionellen Gruppen, die zu den funktionellen Gruppen des Copolymerisates komplementär sind. Bevorzugt sind solche Reaktionspartner, mit denen die Reaktion erst bei erhöhten Temperaturen, d.h. bei Temperaturen wenig oberhalb des Glasübergangsbereiches, abreagieren, da eine vor der Verfilmung einsetzende Härtungsreaktion die Verfilmung zu einer fehlerfreien, glänzenden Oberfläche stören kann. Weiterhin sind solche Vernetzungsmittel geeignet, deren Schmelz- oder Erweichungspunkt über dem Bereich des Glasübergangsbereiches der erfindungsgemäßen Polymeren liegt oder besonders bevorzugt 5 bis 10°C oberhalb dieser Temperatur.

Besonders geeignete Binder-Vernetzungsmittel-Systeme können sowohl als Binder- als auch als Vernetzungsmittel die erfindungsgemäßen Polymerisate enthalten, wobei z.B. der Binder eine Polycarbonsäure und der Härter eine Polyglycidylverbindung ist. Weiterhin kommen als Härter auch andere Polymere, wie Polyepoxid-Harze, Isocyanat- oder Hydroxylgruppen tragende Polyurethane in Frage, sofern die erfindungsgemäßen polymeren Bindemittel mit komplementären Gruppen funktionalisiert sind.

In gleicher Weise geeignet sind Vernetzungsmittel, die die genannten funktionellen Gruppen in verkappter Form enthalten und die funktionelle Gruppe erst beim Einbrennen freisetzen.

Mit den erfindungsgemäßen Polymerisaten stehen einkomponentige Binder-Härter-Systeme zur Verfügung, bei denen die Temperaturdifferenz zwischen maximal zulässiger Lagertemperatur und erforderlicher Einbrenntemperatur besonders gering ist.

Die erfindungsgemäßen Copolymerisate haben in der Regel hohe Glasübergangstemperaturen von 40 bis 90°C und Erweichungstemperaturen von 70 bis 110°C, wie es für die Schmelzreaktion und die Verfilmung erwünscht ist.

Die Einbrenntemperatur liegt bevorzugt bei 120 bis 170°C, bevorzugt bei 130 bis 150°C.

Die Einbrennzeiten liegen bei 4 bis 10, bevorzugt bei 15 bis 30 und besonders bevorzugt bei 20 bis 25 Minuten.

Die erfindungsgemäßen Copolymerisate können als Bindemittel zusammen mit anderen Stoffen wie den üblichen anorganischen Füllstoffen eingesetzt werden.

Die erfindungsgemäßen Copolymerisate können in Pulverform, aber auch in Form von wäßrigen Dispersionen oder Lösungen in organischen Lösemitteln verwendet werden. Es handelt sich bei den Dispersionen oder Lösungen vorzugsweise um solche mit hohem Feststoffgehalt, vorzugsweise mit mindestens 50, besonders bevorzugt mindestens 60 und ganz besonders bevorzugt mindestens 70 Gew.-% Polymer (fest), bezogen auf die Lösung oder Dispersion.

Die erfindungsgemäßen Copolymerisate dienen als Beschichtungsmittel für beliebige Substrate wie Metalle, Holz, Spanplatten oder Kunststoffe. Besonders geeignet sind die Verbindungen als unpigmentierter Decklack bei der Autokarosseriebeschichtung.

### Beispiel 1

In einen 5 l-Reaktor wurde bei 180°C zu einer Vorlage aus 350 g Isopropanol während 1 Stunde kontinuierlich eine Mischung aus 1000 g Glycidylmethacrylat, 600 g Styrol, 320 g Methylacrylat, 2080 g Methylmethacrylat und 77,8 g Di-tert.-butylperoxid gegeben. Anschließend wurde innerhalb von 10 Minuten eine Lösung von 4 g Di-tert.-butylperoxid in 94 g Isopropanol zugesetzt. Die Mischung wurde noch weitere 15 Minuten nachpolymerisiert, wonach die Polymerisation durch Abkühlen auf Raumtemperatur abgebrochen wurde. 468 g der Polymerisatlösung wurden mit 375 g Xylol verdünnt, filtriert und in einem Dünnschichtverdampfer bei 200°C und einem Druck von 1 mbar von flüchtigen Bestandteilen befreit.

Es wurden 142 g eines Copolymerisates erhalten, das eine Glasübergangstemperatur T_{G} von 53°C, einen Erweichungspunkt von 81°C, ein zahlenmittleres Molekulargewicht von 2340, eine Polydispersität von 2,5 sowie 1,58 Epoxydmilliäquivalente pro g (vgl. Ullmanns Encyclopädie der technischen Chemie, Band 8, 3. Auflage von 1957, Seite 436) aufwies.

### Beispiel 2

In einen 5 l-Reaktor wurde bei 180°C zu einer Vorlage aus 600 g Isopropanol während 90 Minuten kontinuierlich eine Mischung aus 990 g Glycidylmethacrylat, 360 g Styrol, 210 g Hydroxyethylacrylat, 2080 g Methylmethacrylat und 54,4 g Di-tert.-butylperoxid gegeben. Anschließend wurde innerhalb von 10 min eine Lösung von 4 g Di-tert.-butylperoxid in 150 g Isopropanol zugesetzt. Die Mischung wurde noch weitere 15 Minuten nachpolymerisiert, wonach die Polymerisation durch Abkühlen auf Raumtemperatur abgebrochen wurde. 579 g der Polymerisatlösung wurden mit 347 g Xylol verdünnt und, wie in Beispiel 1 beschrieben, weiterverarbeitet.

Es wurden 300 g eines Copolymerisates erhalten, das eine Glasübergangstemperatur T_{G} von 54°C, einen Erweichungspunkt von 88°C, ein zahlenmittleres Molekulargewicht von 2830, eine Polydispersität von 2,5 und 1,58 Epoxydmilliäquivalente pro g aufwies.

### Beispiel 3

In einen 5 l Reaktor wurde bei 170°C zu einer Vorlage aus 600 g Cumol während 60 Minuten kontinuierlich eine Mischung aus 900 g Glycidylmethacrylat, 360 g Styrol, 300 g Hydroxyethylacrylat, 1440 g Methylmethacrylat und 54,6 g Di-tert.-butylperoxid kontinuierlich gegeben. Anschließend wurde innerhalb von 30 Minuten eine Lösung von 4 g Di-tert.-butylperoxid in 150 g Isopropanol zugesetzt. Die Mischung noch weitere 15 Minuten nachpolymerisiert, wonach die Polymerisation durch Abkühlen auf Raumtemperatur abgebrochen wurde. Das entstandene Polymerisat wurde mit Xylol auf die doppelte Menge verdünnt und, wie in Beispiel 1 beschrieben, weiterverarbeitet.

Das Copolymerisat wies eine Glasübergangstemperatur T_{G} von 55°C, einen Erweichungspunkt von 93°C, ein zahlenmittleres Molekulargewicht von 3000, eine Polydispersität von 3,1 und 1,71 Epoxydmilliäquivalente pro g auf.

### Beispiel 4

In einen 5 l Reaktor wurde bei 160°C zu einer Vorlage aus 600 g Isopropanol während 60 Minuten kontinuierlich eine Mischung aus 1050 g Hydroxyethylmethacrylat, 360 g Styrol, 1010 g Methylmethacrylat, 480 g Methylacrylat und 57,8 g Di-tert.-butylperoxid während 60 Minuten gegeben. Anschließend wurde innerhalb von 10 Minuten eine Lösung von 4 g Di-tert.-butylperoxid in 150 g Isopropanol zugesetzt. Die Mischung wurde noch weitere 15 Minuten nachpolymerisiert, wonach die Polymerisation durch Abkühlen auf Raumtemperatur abgebrochen wurde. Das Polymerisat wurde mit 1875 g Xylol verdünnt und filtriert. Davon wurden 720 g, wie in Beispiel 1 beschrieben, weiterverarbeitet.

Es wurden 324 g eines Copolymerisates erhalten, das eine Glasübergangstemperatur T_{G} von 59°C, einen Erweichungspunkt von 94°C, ein zahlenmittleres Molekulargewicht von 1700, eine Polydispersität von 2,3 und eine OH-Zahl von 134 aufwies.

### Beispiel 5

In einen 5 l-Reaktor wurde bei 170°C zu einer Vorlage aus 600 g Cumol während 60 Minuten kontinuierlich eine Mischung aus 900 g Methacrylsäure, 240 g Methylacrylat, 1050 g Methylmethacrylat und 61,9 g Di-tert.-butylperoxid während 1 Stunde gegeben. Anschließend wurde innerhalb von 10 Minuten eine Lösung von 4 g Di-tert.-butylperoxid in 159 g Cumol zugesetzt. Die Mischung wurde noch weitere 15 Minuten nachpolymerisiert, wonach die Polymerisation durch Abkühlen auf Raumtemperatur abgebrochen wurde. 2794 g der Polymerisatlösung wurden mit 720 g Isopropanol verdünnt und filtriert. Davon wurden 705 g, wie in Beispiel 1 beschrieben, weiterverarbeitet.

Es wurden 237 g eines Copolymerisates erhalten, das eine Glasübergangstemperatur T_{G} von 49°C, einen Erweichungspunkt von 83°C, ein zahlenmittleres Molekulargewicht von 1530, eine Polydispersität von 2,7 und eine OH-Zahl von 134 aufwies.

### Beispiel 6

In einen 5 l Reaktor wurde bei 170°C zu einer Vorlage aus 750 g Cumol während 60 Minuten kontinuierlich eine Mischung aus 90 g Acrylsäure, 270 g Maleinsäureanhydrid, 330 g Styrol, 405 g n-Butylacrylat, 1905 g Methylmethacrylat und 64 g Di-tert.-butylperoxid während 1 Stunde gegeben. Die Mischung wurde noch weitere 5 Minuten nachpolymerisiert, wonach die Polymerisation durch Abkühlen auf Raumtemperatur abgebrochen wurde. Die Polymerisatlösung wurde mit 1875 g Cumol verdünnt und danach filtriert. Davon wurden 550 g, wie in Beispiel 1 beschrieben, weiterverarbeitet.

Es wurden 239 g eines Copolymerisates erhalten, das eine Glasübergangstemperatur T_{G} von 51°C, einen Erweichungspunkt von 97°C, ein zahlenmittleres Molekulargewicht von 1690, eine Polydispersität von 2,5 und eine Säurezahl von 134 und 0,78 Anhydridmilliäquivalente pro g aufwies.

## Patentansprüche

1. Vernetzbare Copolymerisate mit einem zahlenmittleren Molekulargewicht von 1500 bis 6000 und einer Molekulargewichtsverteilung entsprechend einer Polydispersität von 1 bis zu 4,0, welche aus
a) 50 bis 85 mol-% eines Monomeren (a) mit dem Strukturelement der Methacrylsäure,
b) 15 bis 50 mol-% eines Monomeren (b) mit dem Strukturelement der Acrylsäure, des Styrols oder eines Styrolderivates und
c) 0 bis 20 mol-% weiterer radikalisch polymerisierender Comonomeren (c)
aufgebaut sind, wobei
d) 5 bis 40 mol-% der Gesamtmenge der Monomeren (a) bis (c) funktionelle Gruppen tragende Monomeren (d) sind, über die eine Vernetzung durch Kondensations- oder Additionsreaktionen mit einem Vernetzungsmittel herbeigeführt werden kann,
erhältlich durch radikalische Substanz- oder Lösungspolymerisation bei einer Temperatur von 140 bis 220°C und einer mittleren Verweilzeit von 2 bis 90 min.

2. Vernetzbare Copolymerisate nach Anspruch 1, erhältlich durch Polymerisation nach der Methode der Dünnschichtpolymerisation.

3. Vernetzbare Copolymerisate nach Anspruch 1 oder 2 aufgebaut aus:
55 bis 80 mol-% eines Monomeren (a)
20 bis 45 mol-% eines Monomeren (b)
0 bis 10 mol-% eines Monomeren (c).

4. Verfahren zur Herstellung von Copolymerisaten mit einem zahlenmittleren Molekulargewicht von 1500 bis 6000 und einer Molekulargewichtsverteilung entsprechend einer Polydispersität von 1 bis 4,0, durch radikalische Polymerisation einer Monomerenmischung enthaltend
a) 60 bis 95 mol-% eines Monomeren (a) mit dem Strukturelement der Methacrylsäure
b) 5 bis 40 mol-% eines Monomeren (b) mit dem Strukturelement der Acrylsäure, des Styrols oder eines Styrolderivates und
c) 0 bis 20 mol-% weiterer radikalisch polymerisierender Monomeren (c),
wobei
d) 5 bis 40 mol-% der Gesamtmenge der Monomeren (a) bis (c) funktionelle Gruppen tragende Monomeren (d) sind, über die eine Vernetzung durch Kondensations- oder Additionsreaktionen mit einem Vernetzungsmittel herbeigeführt werden kann,
dadurch gekennzeichnet, daß man die Polymerisation in Substanz oder Lösung bei einer Temperatur von 140 bis 220°C und einer mittleren Verweilzeit von 2 bis 90 min vornimmt.

5. Verfahren nach Anspruch 4, dadurch gekennzeichnet, daß man die Monomeren (a), (b) und (c) bis zu einem Umsatz von 70 bis 95 mol-% polymerisiert und die nicht umgesetzten Monomeren vom Polymerisat entfernt.

6. Verfahren nach Anspruch 4 bis 5, dadurch gekennzeichnet, daß die radikalische Polymerisation der Monomeren (a), (b) und (c) nach der Art der Lösungspolymerisation in Gegenwart von Isopropanol, Cumol oder m-Xylol durchgeführt wird.

7. Verwendung der vernetzbaren Copolymerisate gemäß den Ansprüchen 1 bis 3 als vernetzbare Bindemittelkomponente für die Herstellung von thermisch härtbaren Überzügen.

8. Für thermisch härtbare Pulverlackbeschichtungen geeignete Zubereitungen, enthaltend
A) ein vernetzbares Copolymerisat gemäß den Ansprüchen 1 bis 6 als Bindemittel und
B) ein Vernetzungsmittel, das mit den Copolymerisaten in einer Additions- oder Kondensationsreaktion reagiert.

9. Verwendung der Zubereitungen gemäß Anspruch 8 für die Herstellung von thermisch härtbaren Überzügen nach den Methoden der Pulverlackbeschichtung.

10. Mit Überzügen versehene Gegenstände, erhältlich unter Verwendung der vernetzbaren Copolymerisate gemäß den Ansprüchen 1 bis 3 als Bindemittel.
